# EUROPÄISCHE PATENTANMELDUNG

(11) **EP 0 644 369 A1**
(43) Veröffentlichungstag der Anmeldung: **22.03.1995**
(21) Anmeldenummer: 94109483.1
(22) Anmeldetag: 20.06.1994
(51) Int. Cl.: F16N 11/10

(54) **Schmierstoffspender zur gasgesteuerten Abgabe eines Schmiermittels an eine Maschine**

(30) Priorität: 21.09.1993 DE 4331946
(71) Anmelder: Satzinger GmbH & Co., D-97717 Euerdorf (DE)
(72) Erfinder: Graf, Walter, Dipl.-Ing., D-97717 Euerdorf (DE)
(74) Vertreter: Andrejewski, Walter, Dr.

(57) **Zusammenfassung**

Schmierstoffspender (1) zur gasgesteuertern Abgabe eines Schmierstoffes an eine Maschine, mit einem Gehäuse (2) für die Aufnahme eines Schmierstoffvorrates, einem Maschinenanschlußteil (3) mit Schmierstoffabgabekanal (4) an einer Seite des Gehäuses sowie einer Gasentwicklungszelle (5) an der dem Anschlußteil (3) gegenüberliegenden Seite des Gehäuses (2). Die Gasentwicklungszelle (5) als ein selbständiges, mehrteiliges Bauteil ausgeführt ist, welches aus einem Bodenteil (6) einer Magazinaufnahme (7) und einer Abdeck-Kappe (8) besteht sowie in einer Ausnehmung (9) des Gehäuses (2) als Boden einsetzbar und in dieser festssetzbar ist, wobei die Abdeck-Kappe (8) mit dem Bodenteil (6) abschiebbar verbunden und in die Magazinaufnahme (7) ein Magazin (10) mit einem darin untergebrachten galvanischen Gasentwicklungselement (11) einsetzbar ist. Das Magazin (10) ist im eingeschraubten Zustand zwischen einer Einschaltstellung und einer Ausschaltstellung verdrehbar. Es weist einen Korb (16) auf, in der das Gasentwicklungselement (11) eingesetzt ist. Der Korb (16) taucht in Einschaltstellung des Magazins (10) in die Gesentwicklungsflüssigkeit ein. In der Ausschaltstellung des Magazins ist das Gasentwicklungselement (11) von der Gasentwicklungsflüssigkeit trennbar.

## Beschreibung

Die Erfindung betrifft einen Schmierstoffspender zur gasgesteuerten Abgabe eines Schmierstoffes an eine Maschine - mit einem Gehäuse für die Aufnahme eines Schmierstoffvorrates, einem Maschinenanschlußteil mit Schmierstoffabgabekanal an einer Seite des Gehäuses, einer Gasentwicklungszelle an der dem Maschinenanschlußteil gegenüberliegenden Seite des Gehäuses und mit einem in das Gehäuse eingepaßten Stellkolben, wobei die Bewegung des Stellkolbens von dem entwickelten Gas gesteuert ist. - Die Gasentwicklung in der Gasentwicklungszelle beruht auf einem elektrochemischen Vorgang. Dazu sind zumeist ein Gasentwicklungselement, welches aus einem Metall oder einer Metalllegierung besteht, und eine Gasentwicklungsflüssigkeit, zum Beispiel eine Base oder eine Säure vorgesehen, die miteinander gasentwickelnd reagieren. Die Gasentwicklung ist bei Inbetriebnahme des Schmierstoffspenders einschaltbar und danach ein langsamer zeitabhängiger Vorgang, der mit der Erschöpfung der Gasentwicklung durch Verbrauch des Gasentwicklungselementes bzw. der Gasentwicklungsflüssigkeit endet. Die Gasentwicklung ist nicht zu beliebigen Zeiten ein- und ausschaltbar.

Bei dem bekannten Schmierstoffspender des eingangs beschriebenen Aufbaus, von dem die Erfindung ausgeht (DE 38 11 469 A1), ist das Gehäuse auf der dem Anschlußteil gegenüberliegenden Seite durch einen angeformten Boden abgeschlossen. In dem Boden befindet sich eine zentrale Ausnehmung. Das Anschlußteil befindet sich in einem in den Gehäusemantel eingesetzten Deckel, der mit Hilfe einer Falznaht gehalten ist.

Die Gasentwicklungszelle ist kein selbständiges Bauteil. Sie besteht aus einem Bodenteil und einer elastischen Haube, die mit dem Bodenteil verbunden ist. In dem Bodenteil der Gasentwicklungszelle befindet sich eine Magazinaufnahme, die zur elastischen Haube hin durch eine Trennwand abgeschlossen ist. Die Gasentwicklungszelle wird mit der Gasentwicklungsflüssigkeit gefüllt und als vorgefertigtes Bauteil vor dem Einsetzen des Deckels in das Gehäuse eingeführt. Danach wird der Stellkolben in das Gehäuse eingesetzt, der Deckel mit dem Anschlußteil wird aufgesetzt. Der Stellkolben wird nicht unmittelbar von dem Gas, welches sich nach Inbetriebnahme des Schmierstoffspenders entwickelt, beaufschlagt. Er wird vielmehr von der elastischen Haube beaufschlagt, die sich bei der Gasentwicklung aufbläht. In die zentrale Ausnehmung des Bodens wird das Magazin eingesetzt. Es wird in die Magazinaufnahme eingeschraubt und kann die Trennwand der Magazinaufnahme absprengen oder zerstören. Das Magazin selbst besitzt einen Hohlraum für die Aufnahme des Gasentwicklungselementes. Dieser ist von einer membranartigen Trennwand abgeschlossen, die galvanisch zerstört wird, wenn das Magazin in der beschriebenen Weise eingeschraubt ist und die Gasentwicklungsflüssigkeit mit dieser Trennwand in Verbindung kommt. Die Ausdrücke Boden und Deckel besagen nicht, daß sich der Boden unten und der Deckel oben befindet. Im montierten Zustand ist zumeist der Boden oben, der Deckel aber unten angeordnet. - Auch bei anderen Schmierstoffspendern (vgl. DE 37 18 341 C2) ist die Gasentwicklungszelle kein selbständiges Bauteil, sondern ein Raumbereich in dem Gehäuse, den der Stellkolben von dem Schmiermittelvorrat abtrennt.

Der Erfindung liegt das technische Problem zugrunde, einen Schmierstoffspender zur gasgesteuerten Abgabe eines Schmierstoffes an eine Maschine so zu gestalten, daß die Gasentwicklung beliebig ein- und ausschaltbar ist.

Zur Lösung dieser Aufgabe ist Gegenstand der Erfindung ein Schmierstoffspender zur gasgesteuerten Abgabe eines Schmierstoffes an eine Maschine, - mit einem Gehäuse für die Aufnahme eines Schmierstoffvorrates, einem Maschinenanschlußteil mit Schmierstoffabgabekanal an einer Seite des Gehäuses sowie einer Gasentwicklungszelle an der dem Anschlußteil gegenüberliegenden Seite des Gehäuses,
wobei die Gasentwicklungszelle als ein stelbständiges, mehrteiliges Bauteil ausgeführt ist, welches aus einem Bodenteil einer Magazinaufnahme und einer Abdeck-Kappe besteht sowie in einer Ausnehmung des Gehäuses als Boden einsetzbar und in dieser festssetzbar ist, wobei die Abdeck-Kappe mit dem Bodenteil abschiebbar verbunden und in die Magazinaufnahme ein Magazin mit einem darin untergebrachten galvanischen Gasentwicklungselement einsetzbar ist,
wobei im jungfräulichen Zustand der Gasentwicklungszelle in einer Gasentwicklungsflüssigkeitskammer zwischen Bodenteil und Abdeck-Kappe eine Gasentwicklungsflüssigkeit angeordnet ist, mit der das Gasentwicklungselement bei Kontakt gasbildend reagiert und von der das in der Magazinaufnahme eingesetzte Magazin mit dem Gasentwicklungselement im jungfräulichen Zustand der Gasentwicklungszelle durch eine Trennwand getrennt ist,
wobei die Abdeck-Kappe zugleich als Stellkolben ausgebildet ist, der von dem entwickelten Gas gesteuert ist, und wobei das Magazin als ein ein- oder mehrteiliges zylindrisches Bauteil mit Außengewinde und Innengewinde für die Aufnahme des Gasentwicklungselementes ausgebildet und in die Magazinaufnahme einschraubbar ist,
wobei das Magazin im eingeschraubten Zustand zwischen einer Einschaltstellung und einer Ausschaltstellung verdrehbar ist und einen Korb aufweist, in den das Gasentwicklungselement eingesetzt ist, und wobei der Korb in Einschaltstellung des Magazins in die Gasentwicklungsflüssigkeit eintaucht sowie in der Ausschaltstellung des Magazins von der Gasentwicklungsflüssigkeit trennbar ist.

Erfindungsgemäß ist bei einem Schmierstoffspender des eingangs beschriebenen Aufbaus die Anordnung zunächst weiterhin so getroffen, daß die Gasentwicklungszelle als ein selbständiges Bauteil ausgeführt ist, welches aus einem Bodenteil, einer Magazinaufnahme und einer Abdeck-Kappe besteht sowie in einer Ausnehmung des Gehäuses als Boden einsetzbar und in dieser festsetzbar ist, wobei die Abdeck-Kappe mit dem Bodenteil abschiebbar verbunden und in die Magazinaufnahme ein Magazin mit einem darin untergebrachten galvanischen Gasentwicklungselement einsetzbar ist, daß im jungfräulichen Zustand der Gasentwicklungszelle in dem Raum zwischen Bodenteil und Abdeck-Kappe eine Gasentwicklungsflüssigkeit angeordnet ist, mit der das Gasentwicklungselement bei Kontakt gasbildend reagiert und von der das in die Magazinaufnahme eingesetzte Magazin mit dem Gasentwicklungselement im jungfräulichen Zustand der Gasentwicklungszelle durch eine Trennwand getrennt ist, wobei die Abdeck-Kappe zugleich als der Stellkolben ausgebildet ist. Die Trennwand ist durch Betätigung einer mit dem Magazin verbundenen mechanischen Einschalteinrichtung abdrückbar oder zerstörbar ist, so daß das Gasentwicklungselement mit der Gasentwicklungsflüssigkeit in Kontakt kommt und die Gasentwicklung einsetzt. Die als Stellkolben ausgebildete Abdeck-Kappe ist von dem sich entwickelnden Gas von dem Bodenteil abschiebbar sowie dabei und danach von dem Gas als Stellkolben weiterbewegbar ist.

Die Erfindung geht von der Erkenntnis aus, daß bei einem Schmierstoffspender des vorstehend beschriebenen Aufbaus das Magazin für das Gasentwicklungselement auf einfache Weise so weiter ausgebildet werden kann, daß ein willkürliches Einund Ausschalten der Gasentwicklung möglich ist und dadurch eine weitere Anpassung an den betriebsmäßigen Bedarf durchgeführt werden kann. Dazu ist in dem Magazin ein Korb angeordnet, in den das Gasentwicklungselement eingesetzt ist, wobei der Korb in Einschaltstellung des Magazins in die Gasentwicklungsflüssigkeit eintaucht, sowie in Ausschaltstellung des Magazins von der Gasentwicklungsflüssigkeit trennbar ist. Es versteht sich, daß das Magazin, unter Ausnutzung der Verschraubung, eine Einschaltstellung und eine Ausschaltstellung aufweisen muß, die beliebig verwirklicht werden können.

Im einzelnen bestehen im Rahmen der Erfindung mehrere Möglichkeiten der weiteren Ausbildung und Gestaltung. So kann die Gasentwicklung dadurch unterbrochen werden, daß das Gasentwicklungselement beim Einfahren des Korbes in die Ausschaltstellung aus der Gasentwicklungsflüssigkeit heraushebbar ist. Es besteht aber andererseits auch die Möglichkeit, das Gasentwicklungselement beim Einfahren des Korbes in die Ausschaltstellung in einen Magazinraum zu verbringen, der von einer Verschlußplatte des Korbes verschließbar ist. Sollte sich bei dieser Ausführungsform in dem Magazinraum Gasentwicklungsflüssigkeit befinden, so läuft die Gasentwicklung zwar weiter, sie kann jedoch nicht mehr schmierstoffspendend wirksam sein. Sie kann beispielsweise zur Außenatmosphäre hin über eine Überdruckventil oder dergleichen abgelassen werden.

In bezug auf die konstruktive Gestaltung bestehen im Rahmen der Erfindung mehrere Möglichkeiten. Sie sind Gegenstand der Patentansprüche 4 und 5 und werden im folgenden anhand einer lediglich ein Ausführungsbeispiel darstellenden Zeichnung ausführlicher erläutert. Es zeigen
- Fig. 1: teilweise im Vertikalschnitt eine Ansicht eines erfindungsgemäßen Schmierstoffspenders, wobei die wesentlichen Bauteile auseinandergezogen sind,
- Fig. 2: den Gegenstand nach Fig. 1 mit zusammengesetzter Gasentwicklungszelle und eingesetztem Magazin,
- Fig. 3: in gegenüber den Fig. 1 und 2 vergrößertem Maßstab den Ausschnitt A aus dem Gegenstand der Fig. 2,
- Fig. 4: in nochmals vergrößertem Maßstab das Magazin aus dem Gegenstand nach Fig. 3,
- Fig. 5: den Gestand nach Fig. 4 in anderer Funktionsstellung und
- Fig. 6: entsprechend der Fig. 3 eine andere Ausführungsform einer Gasentwicklungszelle für einen erfindungsgemäßen Schmierstoffspendern.

Der in den Fig. dargestellte Schmierstoffspender 1 dient zur gasgesteuerten Abgabe eines Schmierstoffes an eine Maschine. Zum grundsätzlichen Aufbau gehören zunächst ein Gehäuse 2 für die Aufnahme eines Schmierstoffvorrates, ein Maschinenanschlußteil 3 mit Schmierstoffabgabekanal 4 an einer Seite des Gehäuses 2 sowie eine Gasentwicklungszelle 5 an der dem Anschlußteil 3 gegenüberliegenden Seite des Gehäuses 2.

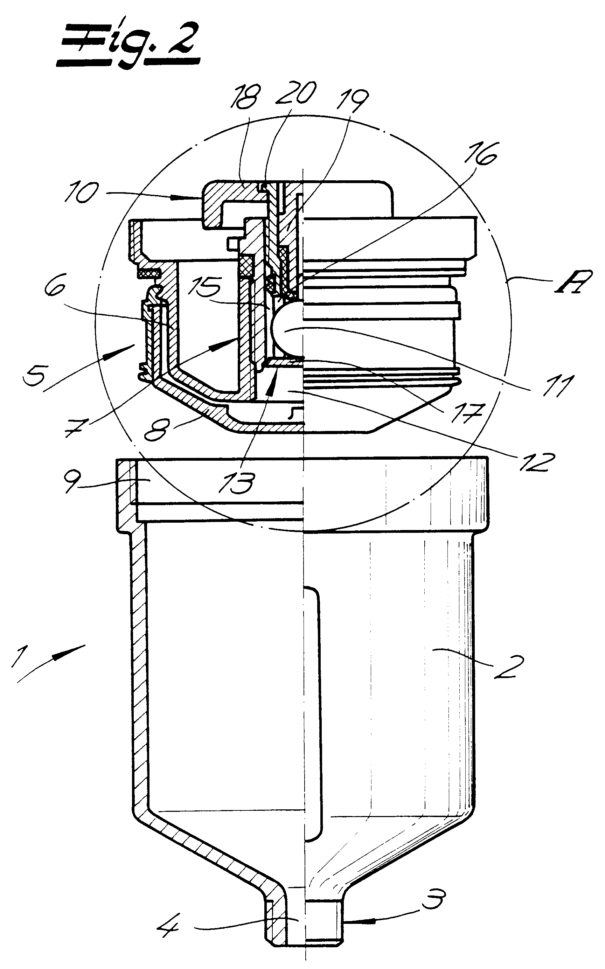

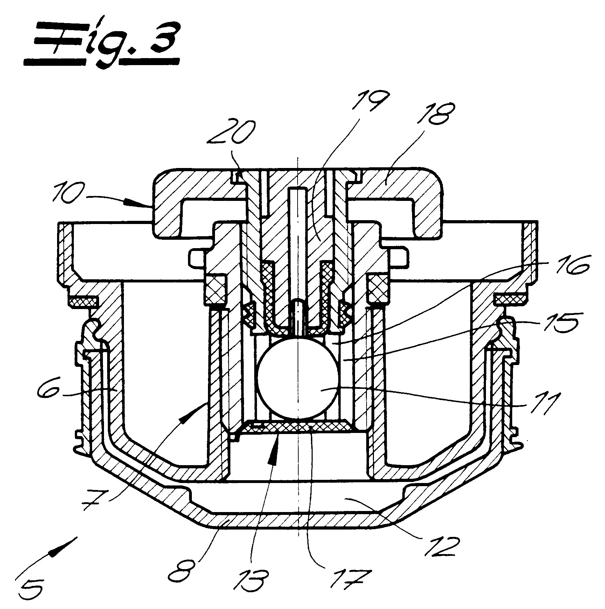

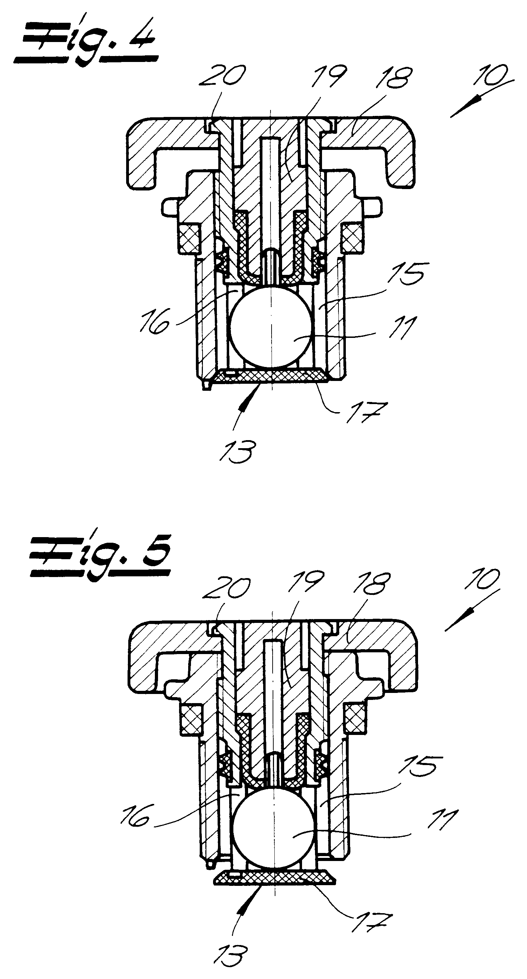

Die Gasentwicklungszelle 5 ist als ein selbständiges Bauteil ausgeführt, welches aus einem Bodenteil 6, einer Magazinaufnahme 7 und einer Abdeck-Kappe 8 besteht. Es ist in eine Ausnehmung 9 des Gehäuses 2 als Boden einsetzbar und in dieser Ausnehmung 9 festsetzbar. Die Abdeck-Kappe 8 ist mit dem Bodenteil 6 abschiebbar verbunden. In die Magazinaufnahme 7 ist ein Magazin 10 mit einem darin untergebrachten galvanischen Gasentwicklungselement 11 einsetzbar. Die Anordnung ist so getroffen, daß im jungfräulichen Zustand der Gasentwicklungszelle 5 in einer Gasentwicklungsflüssigkeitskammer 12 zwischen Bodenteil 6 und Abdeck-Kappe 8 eine Gasentwicklungsflüssigkeit angeordnet ist. Mit dieser Gasentwicklungsflüssigkeit reagiert das Gasentwicklungselement 11 bei Kontakt gasbildend. Von der Gasentwicklungsflüssigkeit ist das in die Magazinaufnahme 7 eingesetzte Magazin 10 mit dem Gasentwicklungselement 11 im jungfräulichen Zustand der Gasentwicklungszelle 5 durch eine Trennwand 13 getrennt. Die schon erwähnte Abdeck-Kappe 8 ist zugleich als Stellkolben ausgebildet, der von dem entwickelten Gas gesteuert ist. Insbesondere aus den Fig. 4 bis 6 entnimmt man, daß das Magazin 10 als ein mehrteiliges zylindrisches Bauteil mit Außengewinde 14 und Innenraum 15 für die Aufnahme des Gasentwicklungselementes 11 ausgebildet ist. Es ist in die Magazinaufnahme 7 einschraubbar.

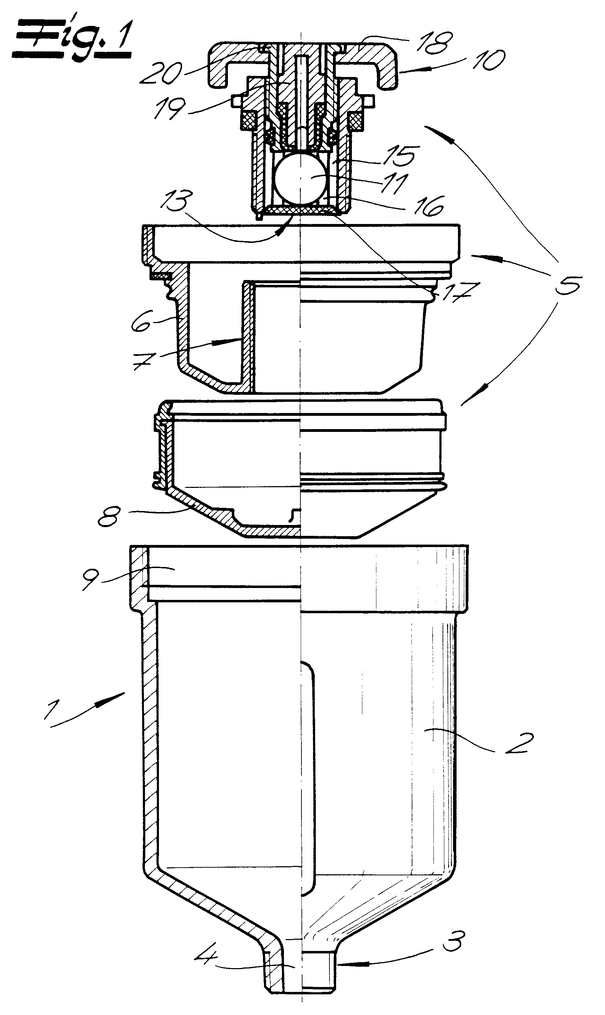

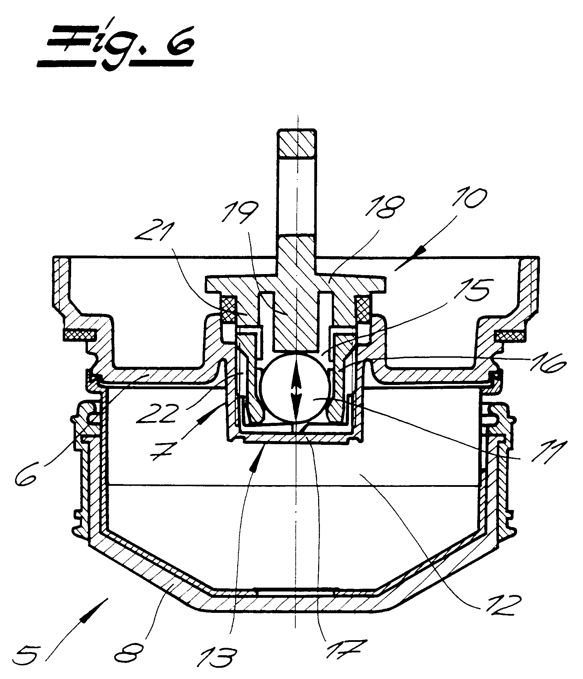

Die Anordnung ist so getroffen, daß das Magazin 10 im eingeschraubten Zustand zwischen einer Einschaltstellung "Ein" und einer Ausschaltstellung "Aus" verdrehbar ist. Es ist im übrigen mit einem Korb 16 ausgerüstet, in den das Gasentwicklungselement 11 eingesetzt ist. Der Korb 16 taucht in Einschaltstellung des Magazins 10 in die Gasentwicklungsflüssigkeit ein und ist in Ausschaltstellung des Magazins 10 von der Gasentwicklungsflüssigkeit trennbar. Bei der Ausführungsform nach Fig. 6 ist das Gasentwicklungselement 10 beim Einfahren des Korbes 16 in die Ausschaltstellung aus der Gasentwicklungsflüssigkeit heraushebbar. Bei der Ausführungsform nach den Fig. 1 bis 5 wird das Gasentwicklungselement 11 beim Einfahren des Korbes 16 in die Ausschaltstellung in einen Magazinraum 15 verbracht, der von einer Verschlußplatte 17 des Korbes 16 verschließbar ist. Dabei zeigt die Fig. 4 die verschlossene Stellung, die Fig. 5 die geöffnete Stellung. In der geöffneten Stellung dringt die Gasentwicklungsflüssigkeit in den Korb 16 mit dem Gasentwicklungselement ein, so daß die Gasentwicklung stattfindet. In verschlossener Stellung kann die Gasentwicklungsflüssigkeit nicht nachgeliefert werden. Sollte in dieser Ausschaltstellung noch Gas frei werden, so beeinflußt dieses die Schmierstoffabgabe nicht mehr, es kann auf andere Weise, zum Beispiel über ein Überdruckventil zur Atmosphäre hin freigesetzt werden.

Bei der Ausführungsform nach den Fig. 1 bis 5 besitzt das Magazin 10 eine Magazinabschlußplatte 18 mit einem angeformten Magazinstempel 19, auf den ein mit einer Verschlußplatte 17 versehener Korb 16 aufschiebbar ist. Der Korb 16 ist an der Magazinabschlußplatte 18 und/oder am Magazinstempel 19 mit Rastelementen 20 gehalten. Der Korb 16 weist das Außengewinde 14 auf und der Magazinstempel 19 fixiert das Gasentwicklungselement 11. Der Unterschied zwischen der Einschaltstellung "Ein" einerseits und der Ausschaltstellung "Aus" andererseits ergibt sich aus einer vergleichenden Betrachtung der Fig. 4 und 5 und bedarf nicht der weiteren Erläuterung.

Bei der Ausführungsform nach Fig. 6 ist die Anordnung so getroffen, daß das Magazin 10 eine Magazinabschlußplatte 18 mit einem angeformten Magazinstempel 19 und mit angeformten Korbaufnahmegreifern 21 aufweist, die Außengewindeteile 22 tragen. In die Korbaufnahmegreifer 21 ist der Korb 16 in axialer Richtung verschiebbar eingesetzt, wobei das Maß der Verschiebung durch einen Doppelpfeil angedeutet wurde. Beim Einfahren des Korbes 16 in die Einschaltstellung wird über die Korbaufnahmegreifer 21 oder angeschlossene Bauteile die Magazinabschlußplatte 18 abgesprengt. Danach kann durch eine weitere Betätigung des Einschaltelementes das Gasentwicklungselement 11 in die Gasentwicklungsflüssigkeit eingefahren werden. Beim Ausschalten erfolgt in bezug auf den Korb 16 und das Gasentwicklungselement 11 die umgekehrte Bewegung. Die Abdeck-Kappe 8 ist auch hier mit einem Bodenteil 6 abschiebbar verbunden.

## Patentansprüche

1. Schmierstoffspender (1) zur gasgesteuertern Abgabe eines Schmierstoffes an eine Maschine - mit
einem Gehäuse (2) für die Aufnahme eines Schmierstoffvorrates,
einem Maschinenanschlußteil (3) mit Schmierstoffabgabekanal (4) an einer Seite des Gehäuses sowie
einer Gasentwicklungszelle (5) an der dem Anschlußteil (3) gegenüberliegenden Seite des Gehäuses (2),
wobei die Gasentwicklungszelle (5) als ein selbständiges, mehrteiliges Bauteil ausgeführt ist, welches aus einem Bodenteil (6) einer Magazinaufnahme (7) und einer Abdeck-Kappe (8) besteht sowie in eine Ausnehmung (9) des Gehäuses (2) als Boden einsetzbar und in dieser festssetzbar ist, wobei die Abdeck-Kappe (8) mit dem Bodenteil (6) abschiebbar verbunden und in die Magazinaufnahme (7) ein Magazin (10) mit einem darin untergebrachten galvanischen Gasentwicklungselement (11) einsetzbar ist,
wobei im jungfräulichen Zustand der Gasentwicklungszelle (5) in einer Gasentwicklungsflüssigkeitskammer (12) zwischen Bodenteil (6) und Abdeck-Kappe (8) eine Gasentwicklungsflüssigkeit angeordnet ist, mit der das Gasentwicklungselement (11) bei Kontakt gasbildend reagiert und von der das in die Magazinaufnahme (7) eingesetzte Magazin (10) mit dem Gasentwicklungselement (11) im jungfräulichen Zustand der Gasentwicklungszelle durch eine Trennwand (13) getrennt ist,
wobei die Abdeck-Kappe (8) zugleich als Stellkolben ausgebildet ist, der von dem entwickelten Gas gesteuert ist, und wobei das Magazin (10) als ein ein- oder mehrteiliges zylindrisches Bauteil mit Außengewinde (14) und Innenraum (15) für die Aufnahme des Gasentwicklungselementes (11) ausgebildet und in die Magazinaufnahme (7) einschraubbar ist,
wobei das Magazin (10) im eingeschraubten Zustand zwischen einer Einschaltstellung "Ein" und einer Ausschaltstellung "Aus" verdrehbar und einen Korb (16) aufweist, in der das Gasentwicklungselement (11) eingesetzt ist, und wobei der Korb (16) in Einschaltstellung des Magazins (10) in die Gasentwicklungsflüssigkeit eintaucht sowie in der Ausschaltstellung des Magazins (10) von der Gasentwicklungsflüssigkeit trennbar ist.

2. Schmierstoffspender nach Anspruch 1, wobei das Gasentwicklungselement (11) beim Einfahren des Korbes (16) in die Ausschaltstellung aus der Gasentwicklungsflüssigkeit heraushebbar ist.

3. Schmierstoffspender nach Anspruch 1, wobei das Gasentwicklungselement (11) beim Einfahren des Korbes in die Ausschaltstellung in einen Magazinraum (15) verbracht wird, der von einer Verschlußplatte (17) des Korbes (16) verschließbar ist.

4. Schmierstoffspender nach einem der Ansprüche 1 oder 3, wobei das Magazin (10) eine Magazinabschlußplatte (18) mit einem angeformten Magazinstempel (19) aufweist, auf den ein mit einer Verschlußplatte (17) versehener Korb (16) aufschiebbar ist, der an der Magazinabschlußplatte (18) und/oder Magazinstempel (19) mit Rastelementen (20) gehalten ist, wobei der Korb das Außengewinde aufweist und der Magazinstempel das Gasentwicklungselement fixiert.

5. Schmierstoffspender nach einem der Ansprüche 1 oder 2, wobei das Magazin (10) eine Magazinabschlußplatte (18) mit einem angeformten Magazinstempel (19) und mit angeformten Korbaufnahmegreifern (21) aufweist, die Außengewindeteile (22) tragen, in welche Korbaufnahmegreifer (21) der Korb (16) in axialer Richtung verschiebbar eingesetzt ist und wobei beim Einfahren des Korbes (16) in die Einschaltstellung über die Korbaufnahmegreifer (21) oder daran angeschlossene Bauteile die Magazinabschlußplatte (18) absprengbar und danach der Korb (16) mit dem Gasentwicklungselement (11) in die Gasentwicklungsflüssigkeit eintauchbar ist.
